# EUROPÄISCHE PATENTANMELDUNG

(11) **EP 1 184 507 A1**
(43) Veröffentlichungstag der Anmeldung: **06.03.2002**
(21) Anmeldenummer: 01810853.0
(22) Anmeldetag: 04.09.2001
(51) Int. Cl.: D06M 13/352, D06M 13/418

(54) **Antimikrobielle Zusammensetzung enthaltend 1,2-Benzisothiazolin-3-on und ihre Verwendung für die Ausrüstung von Textilien**

(30) Priorität: 04.09.2000 CH 17212000
(71) Anmelder: SANITIZED AG, CH-3400 Burgdorf (CH)
(72) Erfinder: Bender, Walter, 3422 Kirchberg (CH)
(74) Vertreter: BOVARD AG - Patentanwälte

(57) **Zusammenfassung**

Freies 1,2-Benzisothazolin-3-on wurde allein oder in Kombination mit anderen Wirkstoffen, vorzugsweise mit Bispyrithion und zum Teil mit 3-Phenoxybenzyl-(1 R,S)-cis-trans-2,2-dimethyl-3-(2,2-dichlorvinyl)-cyclopropancarboxylat in Formulierungen, enthaltend organische Lösungsmittel und Tenside so eingearbeitet, dass wässrig applizierbare Formulierungen für die antimikrobielle und zum Teil akarizide Ausrüstung von Textilien erhalten wurden. Diese Formulierungen konnten allein oder zusammen mit weiteren Textilchemikalien wie Fluorcarbonen oder Polymerdispersionen auf Textilien appliziert werden und zeigten dabei hervorragende antimikrobielle Werte bei einer ausgezeichneten Waschbeständigkeit und einer hervorragenden thermischen Beständigkeit der Formulierungen.

## Beschreibung

Die Erfindung betrifft antimikrobielle Zusammensetzungen, welche 1,2-Benzisothazolin-3-on als antimikrobiellen Wirkstoff enthalten, entweder allein oder in Kombination mit anderen antimikrobiellen Wirkstoffen. Die Formulierung enthält zusätzlich weitere Komponenten wie Lösungsmittel und Tenside wie beispielsweise ethoxylierte Fettalkohole.

Formulierungen für die antimikrobielle Ausrüstung von Textilien müssen sehr viele Bedingungen erfüllen. Neben den toxikologischen Eigenschaften, den antimikrobiellen Eigenschaften, müssen antimikrobiell aktive Stoffe für die Applikation selbst so in eine Formulierung eingebracht werden, so dass sie mit mindestens einer der Methoden, die bei der Ausrüstung von Textilien zur Anwendung kommen, wie Foulardieren, Sprühen, Ausziehen oder Rakeln, auf das Textil aufgebracht werden können. Bei der Applikation wird üblicherweise in wässrigem Medium gearbeitet. Dies bedingt für eine antimikrobiell wirkende Formulierung praktisch zwingend, dass sie aus Wasser applizierbar ist. Nur ganz wenige antimikrobiell wirkende Stoffe sind selbst wasserlöslich. Dieser Aspekt ist einer der zu lösenden Schlüsselpunkte bei der Entwicklung von Formulierungen für den Einsatz im Bereich von antimikrobiellen Ausrüstungen von Textilien.

Textilien werden nach der wässrig erfolgten Ausrüstung getrocknet und je nach der gewählten Ausrüstung kondensiert, das heisst für eine Zeit von einigen 10 Sekunden bis zu einigen wenigen Minuten werden diese Textilien thermisch behandelt, wobei Temperaturen bis zu 180 °C auf dem Tuch erreicht werden können. Diese thermische Belastung erfolgt auf dem Gewebe mit seiner grossen Oberfläche in der Luft, die hohe Mengen Wasserdampf enthält oder bei direkt beheizten Spannrahmen zusätzlich noch mit Verbrennungsgasen angereichert ist. Antimikrobiell wirkende Substanzen enthalten sehr oft funktionale Gruppen und sind somit relativ reaktiv. Dies hat zur Folge, dass unter dieser hohen thermischen Beanspruchung viele Moleküle, die auf Grund anderer Eigenschaften für den Einsatz auf Textilien ideal wären, ganz oder zum grossen Teil zerstört werden. Dies verunmöglicht den Einsatz von solchen Molekülen ganz oder führt dazu, dass die entsprechende Wirksubstanz nur mildere Bedingungen bei der Ausrüstung zulässt, was eindeutig Einschränkungen in den Anwendungsmöglichkeiten mit sich bringt.

Eine antimikrobielle Ausrüstung soll zudem die Echtheiten eines ausgerüsteten Textils nicht wesentlich oder zumindest nicht ungünstig beeinflussen. Dies sind unter anderem die Lichtechtheit, die Reibechtheit und die Farbechtheit. Von antimikrobiellen Ausrüstungen wird zudem eine gewisse Waschpermanenz erwartet. Das heisst, nach einigen Waschprozessen muss die Wirkung gegen Testkeime noch nachweisbar sein.

Diese genannten Rahmenbedingungen werden ganz oder teilweise von einigen Wirkstoffen bereits erfüllt. Folgendes skizziert den Stand der Technik:

1,2-Benzisothazolin-3-on (CAS-Nummer: 2634-33-5) wird unter anderem von den Nipa Laboratories hergestellt und unter anderem als wässrige Dispersion oder als Press-Paste in verschiedener Reinheit und Konzentration vertrieben. Das Produkt wird vorwiegend als das wasserlösliche Natriumsalz für die verschiedensten Anwendungen in vielen verschiedenen Konservierungsmitteln eingesetzt. Dies entweder als Einzelkomponente oder zusammen mit anderen Konservierungsmitteln wie zum Beispiel Mischungen aus 5-Chlor-2-methyl-4-isothiazolin-3-on und 2-Methyl-4-isothiazolin-3-on oder auch die letzt genannte Komponente allein. In dieser Form sind unter anderem Produkte der Firmen Nipa Laboratoires, Thor, Troy und weiteren auf dem Markt. Das Lithiumsalz vom Wirkstoff 1,2-Benzisothazolin-3-on ist ebenfalls in Produkten auf dem Markt und wurde von W. Bauer et al. von der Cassella AG in der Patentschrift DE 1986-3600271 offen gelegt.

Der Wirkstoff 1,2-Benzisothazolin-3-on resp. seine Salze haben gegenüber vielen anderen antimikrobiell wirkenden Verbindungen einige Vorteile. So ist das Molekül über einen breiten pH-Bereich stabil, es zeigt eine gute thermische Stabilität, ist nicht flüchtig, es ist biologisch gut abbaubar, hat gegenüber Warmblütern recht günstige toxikologische Eigenschaften und es werden sehr viele Mikroorganismen mit geringen Einsatzmengen sicher bekämpft.

Das Produkt 1,2-Benzisothazolin-3-on ist unter anderem in der Bundesrepublik Deutschland und in den USA für die Konservierung von Produkten, die in Kontakt mit Lebensmitteln kommen, zugelassen.

In Form des Natriumsalzes wird das 1,2-Benzisothazolin-3-on, zum Teil zusammen mit anderen antimikrobiell wirkenden Stoffen, in verschiedenen Produkten für Anwendungen im Bereich antimikrobielle Ausrüstungen für Textilien seit Jahren eingesetzt. Dies z.B. in den Produkten Sanitized TB 83-35 für die Ausrüstung von Heimtextilien gegen den Bewuchs durch Bakterien und Mikropilze und im Produkt Actigard AM 87-12, das nicht nur gegen den Bewuchs durch Mikroorganismen sondern auch gegen die Besiedelung der ausgerüsteten Textilien durch Hausstaubmilben schützt.

Diese Produkte haben eine Gemeinsamkeit, nämlich dass sie praktisch nicht waschbeständig sind, das heisst, sie können erfolgreich nur für textile Produkte eingesetzt werden, die nicht oder zumindest höchstens selten gewaschen werden. Dies sind zum Beispiel Matratzendrelle, Möbelstoffe und Teppiche. Auch bei diesen Anwendungen ist die Limitierung im normalen Gebrauch schon oft gegeben, da Teppiche gelegentlich shampooniert werden und Matratzen allein schon durch den Schweiss des Benutzers auch nicht ganz so trocken bleiben, wie vielleicht angenommen werden könnte oder dass gar ein solches Textil zur Entfernung von Flecken oder dergleichen ausnahmsweise nass gereinigt wird.

Eine andere Substanz, die für die antimikrobielle Ausrüstung von Textilien eingesetzt wird und aus rein technischer Sicht bestens geeignet ist, ist 2,4,4'-Trichlor-2'-hydroxydiphenylether. Das Produkt ist unter dem Trivialnamen Triclosan bekannt und wird von der Ciba Specialty Chemicals Holding Inc. vertrieben. Für Anwendungen von 2,4,4'-Trichlor-2'-hydroxydiphenylether im Bereich der antimikrobiellen Ausrüstung von Textilien gibt es etliche Produkte auf dem Markt, unter anderem Sanitized T 90-04 oder Sanitized T 96-20. Zum gleichen Thema gibt es Schriften wie z. B. das US-Patent 3,788,803 (S. E. Klein, 29. Januar 1974) oder die Offenlegungsschrift EP 0 908 553 (Ciba SC, veröffentlicht am 14.4.1999 und eingereicht am 5.10.1998). Triclosan wird oft, da vorwiegend gegen Bakterien wirksam, mit anderen Wirkstoffen kombiniert angeboten. Dies sind Formulierungen wie das Produkt Sanitized T 90-04, das neben Triclosan n-Octylisothiazol-3-on enthält. Das ist ein Wirkstoff mit sehr guten Werten gegen Mikropilze, der aber wegen seiner beschränkten thermischen Stabilität die Möglichkeiten bei der Textilausrüstung limitiert. Triclosan hat den Nachteil, dass es unterdessen in sehr vielen Produkten, unter anderem auch Zahnpasten, Kosmetika und Haushaltsreinigern, eingearbeitet wird und somit in erheblichen Mengen in die Umwelt gelangt. Dies könnte bezüglich Akkumulation problematisch sein. Die vorhandenen Daten sprechen an sich gegen eine Bioakkumulation. Zudem enthält die Verbindung erhebliche Mengen Chlor und erfüllt in dieser Hinsicht keinesfalls die Wünsche nach einer Ausrüstung, die AOX frei oder gar vollständig frei von Halogenen ist.

Weiter werden für die antimikrobielle Ausrüstung von Textilien Wirkstoffe wie 2,3,5,6,-Tetrachlor-4-(methylsulfonyl)-pyridin, ein Wirkstoff mit hervorragenden antimikrobiellen Eigenschaften verwendet. Besonders gut ist die Wirkung gegen Mikropilze. Das Produkt wird von Avecia angeboten. Eingesetzt wird 2,3,5,6,-Tetrachlor-4-(methylsulfonyl)-pyridin zum Beispiel im Produkt Sanitized TB 96-17, das für die Ausrüstung von Textilien eingesetzt werden kann. Das Produkt hat sehr gute antimikrobielle Werte und zeigt eine recht gute Waschbeständigkeit auf allen Standardsubstraten, nämlich Baumwolle, Wolle, Polyamid und Polyester.

Weiter wird der Wirkstoff o-Phenylphenol in Anwendungen im Bereich antimikrobielle Ausrüstung für Textilien eingesetzt. Das Produkt hat noch einen weiteren Einsatzzweck, nämlich als Färbehilfsmittel für die Färbung von Polyester bei Temperaturen bis rund 100 °C.

Dieses Produkt ist ebenfalls nicht ausreichend gut waschbeständig und es braucht wegen seiner verhältnismässig schwachen antimikrobiellen Wirkung eine recht beträchtliche Dosis.

Ebenfalls im Einsatz sind Produkte, die Organozinnverbindungen enthalten, so zum Beispiel Tributylzinnmaleinat oder Tributylzinnoxid. Die Verwendung dieser Produkte ist wegen ihrer oekotoxikologischen Werte kritisch. Die Anwendungen im Bereich antimikrobielle Ausrüstung von Textilien sind von der rein technischen Betrachtungsweise her gut bis sogar sehr gut, von der toxikologischen und hier insbesondere von der oekotoxikologischen Sichtweise her jedoch dringend zu überdenken.

Ausgezeichnet wasserlöslich und thermisch sehr stabil ist das Poly-(hexamethylenbiguanid) Hydrochlorid (CAS: 27083-27-8), das als wässrige Lösung unter anderem auch als Sanitized T 96-04 im Markt ist. Dieser Wirkstoff, der recht hoch dosiert werden muss, hat leider praktisch keine Affinität zu anderen Substraten als Cellulosefasern wie Baumwolle. Zudem ist der Wirkstoff biologisch nur sehr schwer abbaubar, was in der Praxis zu Problemen bei der Entsorgung von Ausrüstungsflotten führt.

Neben den genannten Wirkstoffen sind in der Nachausrüstung von Textilien noch weitere Wirkstoffe bereits im Einsatz. So wird 3-Phenoxybenzyl-(1 R,S)-cis-trans-2,2-dimethyl-3-(2,2-dichlorvinyl)-cyclopropancarboxylat, ein synthetisches Pyrethroid, das in verschiedenen cis-trans-Verhältnissen auf dem Markt ist, für Textilien gegen Hausstaubmilben eingesetzt. Daneben gibt es Produkte, die diesen Stoff gegen Motten einsetzen, hier insbesondere auf Wolle. Phyrethroide kommen in der Natur ebenfalls vor. Es gibt auch Produkte, die solche natürlichen Pyrethroide enthalten. In eigenen Arbeiten ist es bisher nicht gelungen, eine auch nur einigermassen dauerhafte Wirkung mit solchen Substanzengemischen zu erreichen, da diese Verbindungen thermisch nicht genügend stabil sind und zudem offenbar zu schnell hydrolysieren. Der wissenschaftlich geführte Nachweis, dass diese natürlichen Produkte, wenn sie in technische Formulierungen eingearbeitet werden, einen länger dauernden Schutz gegen die Besiedelung von Textilien durch Milben bringen, ist noch zu erbringen.

Ebenfalls gegen die Besiedelung durch Milben könnten Textilien mit Tolylfluanid ausgerüstet werden. Dieses Produkt bringt eine ausreichende Waschbeständigkeit bei gleichzeitig gutem Schutz der ausgerüsteten Textilien gegen Mikropilze und gegen Milben. Für den genannten Anwendungszweck steht das Produkt, das als Blattfungizid im Obst-, Wein-, Gemüse- und Zierpflanzenbau eingesetzt wird, aber leider nicht zur Verfügung.

Der Erfindung liegt die Aufgabe zu Grunde, eine Formulierung für die wässrige industrielle Ausrüstung von Textilien, hergestellt aus möglichst allen Standardfasern, nämlich Baumwolle, Wolle, Polyamid, Polyester und Viskose sowie Mischungen aus den genannten Fasern, zu entwickeln, die eine möglichst gute Waschbeständigkeit zeigt und welche die technisch üblichen thermischen Bedingungen der Kondensation möglichst unbeschadet aushält und die kein Triclosan enthält. Zudem soll die Formulierung toxikologisch möglichst unbedenklich sein und möglichst wenig bis idealerweise keine Halogene enthalten.

Gelöst wurde die Aufgabe durch die Entwicklung des nachfolgend beschriebenen Erfindungsgegenstandes.

Gegenstand der vorliegenden Erfindung sind antimikrobiell wirkende Zusammensetzungen, die als Wirkstoff 1,2-Benzisothazolin-3-on enthalten, für die antimikrobielle Ausrüstung von gewebten und nicht gewebten Textilien, welche Zusammensetzungen dadurch gekennzeichnet sind, dass sie mindestens ein polares aprotisches Lösungsmittel oder ein protisches Lösungsmittel in Kombination mit mindestens einem Tensid enthalten.

Erfindungsgemäss können die Zusammensetzungen auch andere antimikrobielle oder akarizide Wirkstoffe oder Kombinationen solcher Wirkstoffe enthalten. Beispielsweise kann damit durch einen entsprechenden zusätzlichen Wirkstoff ein Produkt den damit behandelten gewebten und nicht gewebten Textilien und Fasern einen zusätzlichen Schutz gegen Milben verleihen. Tenside umfassen gemäss der vorliegenden Erfindung auch Emulgatoren, wie sie in verschiedenen Fachgebieten zum Einsatz gelangen.

Typische Vertreter von Wirkstoffen, welche in Kombination mit dem 1,2-Benzisothazolin-3-on verwendet werden können, sind zum Beispiel 2,2'-Dithiopyridin-1-oxid und/oder akariziden Wirkstoffen wie zum Beispiel 3-Phenoxybenzyl-(1 R,S)-cis-trans-2,2-dimethyl-3-(2,2-dichlorvinyl)-cyclopropancarboxylat.

Ideal wirkende und stabile Formulierungen sind dadurch gekennzeichnet, dass das eingesetzte 1,2-Benzisothazolin-3-on nicht als Salz, normalerweise ein Alkali- oder Erdalkalisalz, sondern als freier Wirkstoff eingesetzt wird, vorzugsweise in handelsüblicher Form wie einer vorwiegend wässrigen Dispersion, resp. Press-Paste mit einem Gehalt an Wirkstoff zwischen 25 und 90 %, resp. als Lösung in einem polaren aprotischen Lösungsmittel oder in einem protischen Lösungsmittel resp. Gemisch aus solchen Lösungsmitteln, vorzugsweise in Alkoholen wie idealerweise Glycolen.

Antimikrobielle Formulierungen mit guter Wirkung gegen Bakterien und zusätzlich gegen Mikropilze sind dadurch gekennzeichnet, dass sie neben dem 1,2-Benzisothazolin-3-on den Wirkstoff Bispyrithion enthalten.

Ideale Formulierungen mit Wirkung gegen Bakterien, Mikropilze und gegen Hausstaubmilben sind dadurch gekennzeichnet, dass sie neben dem 1,2-Benzisothazolin-3-on den Wirkstoff Bispyrithion in einer Konzentration von maximal 10 % und/oder den Wirkstoff 3-Phenoxybenzyl-(1 R,S)-cis-trans-2,2-dimethyl-3-(2,2-dichlorvinyl)-cyclopropancarboxylat in einer Konzentration von maximal 10 % enthalten. Prozentangaben beziehen sich normalerweise auf Gewichtsprozente.

Der Aufbau von Formulierungen mit guter Wirkung gegen Bakterien, Mikropilze und Hausstaubmilben ist dadurch gekennzeichnet, dass die Formulierungen zwischen 1 und 20 % 1,2-Benzisothazolin-3-on, 0 bis 10 % Bispyrithion, 0 bis 10 % 3-Phenoxybenzyl-(1 R,S)-cis-trans-2,2-dimethyl-3-(2,2-dichlorvinyl)-cyclopropancarboxylat, ein vorwiegend organisches Lösungsmittel oder ein Gemisch aus organischen Lösungsmitteln, mit vorzugsweise einer oder mehreren stark polaren Komponenten wie N-Methylpyrrolidon oder alkylierten Ameisensäure- oder Essigsäureamiden wie idealerweise N,N-Dimethylformamid oder N,N-Dimethylacetamid, ein aromatisches Lösungsmittel wie vorzugsweise Benzylalkohol und dazu ein Tensid oder ein Gemisch aus Tensiden enthalten.

Vorzugsweise ist der Aufbau von Formulierungen mit guter Wirkung gegen Bakterien, Mikropilze und Hausstaubmilben dadurch gekennzeichnet, dass die Formulierungen zwischen 1 und 20 % 1,2-Benzisothazolin-3-on, 0 bis 10 % Bispyrithion, 0 bis 10 % 3-Phenoxybenzyl-(1 R,S)-cis-trans-2,2-dimethyl-3-(2,2-dichlorvinyl)-cyclopropancarboxylat, ein organisches Lösungsmittel, 1 bis 20 % N-Methylpyrrolidon, 0 bis 70 % eines aromatischen Lösungsmittels wie vorzugsweise Benzylalkohol, ein Tensid oder ein Gemisch aus Tensiden, idealerweise nichtionische Tenside wie ethoxylierte Verbindungen des Nonylphenols oder anderer aromatischer Hydroxyverbindungen oder eine ethoxylierte natürliche oder synthetische Fettsäure oder einen ethoxylierten natürlichen oder synthetischen Fettalkohol wie vorzugsweise einen ethoxylierten Fettalkohol mit einer Kohlenstoffkettenlänge zwischen 8 und 20 Einheiten, ethoxyliert mit 3 bis 30 Einheiten Ethylenoxid, enthalten.

Ausgezeichnete Resultate gegen Bakterien werden von Formulierungen erreicht, die dadurch gekennzeichnet sind, dass diese Formulierungen 1 bis 20 % freies 1,2-Benzisothazolin-3-on, ein vorwiegend organisches Lösungsmittel oder Lösungsmittelgemisch mit vorzugsweise 1 bis 20 % N-Methylpyrrolidon und einem weiteren polaren Lösungsmittel wie idealerweise auf der Basis eines Alkohols, idealerweise einem Glykol und hier wiederum vorzugsweise ein Polyethylenglykol im Konzentrationsbereich von 10 bis 80 %, ein Tensid oder ein Gemisch aus Tensiden, idealerweise nichtionische Tenside wie ethoxylierte Verbindungen des Nonylphenols oder andere ethoxylierte aromatische Hydroxyverbindungen oder ethoxylierte natürliche oder synthetische Fettsäuren oder einen ethoxylierten natürlichen oder synthetischen Fettalkohol wie vorzugsweise ein ethoxylierter Fettalkohol mit einer Kohlenstoffkettenlänge zwischen 8 und 20 Einheiten, ethoxyliert mit 3 bis 30 Einheiten Ethylenoxid, enthalten.

Es können sehr gute antimikrobielle Werte gegen alle Keime und wahlweise auch gute Effekte gegen Hausstaubmilben erreicht werden mit Formulierungen, die mindestens eine der folgenden Komponente enthalten, 1 bis 20 % freies 1,2-Benzisothazolin-3-on, andere antimikrobiellen und/oder akarizide Wirkstoffe, wie vorzugsweise 2,4,4'-Trichlor-2'-hydroxydiphenylether, das Akarizid Permethrin mit dem IUPAC-Namen 3-Phenoxybenzyl-(1 R,S)-cis-trans-2,2-dimethyl-3-(2,2-dichlorvinyl)-cyclopropancarboxylat in allen Isomerenverhältnissen, Tolylfluanid, 2,3,5,6,-Tetrachlor-4-(methylsulfonyl)-pyridin, 5-Amino-1,3-bis-(2-ethylhexyl)-5-methyl-hexahydropyrimidin, quarternären Ammoniumverbindungen, wobei mindestens eine Alkylkette 8 bis 18 Kohlenstoffatome zählt, z. B. Di-n-decyl-dimethyl-ammoniumchlorid, 2-n-Butyl-1,2-Benzisothazolin-3-on, Bispyrithion, 2-n-Octyl-4-isothiazol-3-on, 4,5-Dichlor-2-n-octyl-4-isothiazolin-3-on, Diiodmethylsulfonyltoluol, 3-lod-2-propinylbutylcarbamat, N-(Dichlorfluormethylthio)-phthalimid, o-Phenylphenol, oder 3,4,4'-Trichlorcarbanilid.

Die ideale Verwendung der vorgenannten Formulierungen ist dadurch gekennzeichnet, dass die Formulierungen in Wasser in einer Konzentration von 5 bis 100 Gramm pro Liter Flotte eingesetzt werden, dies entweder allein oder zusammen mit weiteren Textilchemikalien und dass diese Flotte durch Foulardieren, Sprühen, Ausziehen, Schäumen zusammen mit Schaumhilfsmitteln oder Aufrakeln auf gewebte oder nicht gewebte Textilien, Fasern oder Garne oder Tuftings oder Maschenware aufgebracht wird.

Die bezüglich Waschpermanenz noch verbesserte Verwendung der vorgenannten Formulierungen ist dadurch gekennzeichnet, dass die Formulierungen in Wasser in einer Konzentration von 5 bis 100 Gramm pro Liter Flotte zusammen mit weiteren Textilchemikalien wie Vinylacetat-Homo-Copolymeren wie vorzugsweise Appretan TS, Appretan EM, Appretan TT, Appretan DB, Appretan MB extra und Appretan EMR oder Vinylacetat-Ethylen-Copolymeren wie vorzugsweise Appretan TVC, Appretan 3588, Appretan 104, AppretanTV, Appretan 3805-1, Appretan 3201 und Appretan 3802 oder Acrylat-Copolymere wie vorzugsweise Appretan N 9415 N, Appretan N 9212, Appretan N 9410 und ganz speziell Appretan N 9213, Appretan N 9211 und Appretan N 9210 oder Styrol-Acrylat-Copolymere wie vorzugsweise Appretan 680, Appretan N 9616, Appretan N 96-13 oder ganz speziell Appretan N 9610 oder dem Appretan N 9806 oder Hydrophobiermittel resp. Oleophobiermittel, den Fluortelomeren, also dispergierte Fluorcarbone, wie vorzugsweise Nuva FTA-4, Nuva CPA, Nuva FA, Nuva FB, Nuva FBA, Nuva FBN, Nuva FL, Nuva FM, Nuva FSN, Nuva FT, Nuva FW, Nuva FWF, Nuva GPC, Nuva K, Nuva LT, Nuva NF, Nuva NFS, Nuva PTF oder Nuva VPO gleichzeitig oder nacheinander auf gewebte oder nicht gewebte Textilien, Fasern, Garne, Maschenware oder Tuftings aufgebracht werden.

Die idealen Verfahren zur Verwendung der vorgenannten Formulierungen sind dadurch gekennzeichnet, dass diese Formulierungen allein oder zusammen mit anderen Textilchemikalien im Foulard- oder im Auszugsverfahren, im Schaumauftrag oder durch Sprühen auf gewebte oder nicht gewebte Textilien aller Art, aber vorzugsweise enthaltend Fasern aus Baumwolle oder anderen Cellulosefasern, Polyamid, Polyester oder Wolle, aufgebracht werden.

Die Vorteile der erfindungsgemässen Formulierungen sind:

Der üblicherweise als Natrium- resp. Lithiumsalz in vielen Anwendungen der technischen Konservierung erfolgreich eingesetzte und dadurch bestens bekannte, toxikologisch gut untersuchte und vorteilhafte und zudem noch halogenfreie Wirkstoff 1,2-Benzisothazolin-3-on kann als freier Wirkstoff allein oder in Kombination mit anderen Wirkstoffen, eingearbeitet in den erfindungsgemässen Formulierungen, erfolgreich mit dauerhafter antimikrobieller Wirkung auf Textilien appliziert werden.

Sehr geringe Einsatzkonzentrationen von antimikrobiell wirkenden Substanzen für die Erreichung eines optimalen, breiten antimikrobiellen Wirkungsspektrums. Dabei sind technisch sehr gut herzustellende und einfach einzusetzende, stabile Formulierungen gefunden worden, die keine Halogene enthalten. Dies trifft insbesondere auf die Formulierungen zu, die neben 1,2-Benzisothazolin-3-on zusätzlich Bispyrithion (CAS: 3596-28-4) enthalten. Werden diese Formulierungen auf Textilien appliziert, werden hervorragende Werte in Tests, wie zum Beispiel dem Agar-Diffusionstest nach den Schweizer Normen SN 195 920 respektive SN 195 921, gegen ein breites Spektrum von Bakterien und Mikropilzen erhalten.

Wenn zusätzlich ein Schutz gegen die Besiedelung der ausgerüsteten Textilien durch Hausstaubmilben, zum Beispiel Dermatophagoides pteronyssinus, erreicht werden soll, muss sehr wenig Chlor in Kauf genommen werden. Die Formulierungen enthalten dann neben den Stoffen mit einer Wirkung gegen Bakterien respektive gegen Mikropilze zusätzlich 3-Phenoxybenzyl-(1 R,S)-cis-trans-2,2-dimethyl-3-(2,2-dichlorvinyl)-cyclopropancarboxylat. Die Konzentration an organisch gebundenem Chlor ist bei idealer Ausrüstung aber selbst in diesem Fall unter 40 ppm bezogen auf das Gewicht des ausgerüsteten Textils.

Besonders gut bei den erfindungsgemässen Formulierungen ist, dass sie ausgezeichnet mit verschiedensten Polymerdispersionen und Fluorcarbonen kompatibel sind und somit aus dem gleichen Bad mit hervorragenden Gesamtergebnissen appliziert werden können. So ist es bei den Arbeiten gelungen, die Auswaschrate von 3-Phenoxybenzyl-(1 R,S)-cis-trans-2,2-dimethyl-3-(2,2-dichlorvinyl)-cyclopropancarboxylat durch Kombinationen mit handelsüblichen Bindern auf einen Bruchteil der normalen Auswaschrate zu reduzieren.

Mit den erfindungsgemässen Formulierungen ausgerüstete Textilien aus Baumwolle, Polyester, Wolle und Polyamid zeigen ausgezeichnete antimikrobielle Werte. Die Tests, Agar-Diffusionstests, wurden dabei nach den Schweizer Normen SN 195 920 gegen Bakterien und SN 195 921 gegen Mikropilze durchgeführt. Vollkommen überraschend waren dabei die gefunden Werte bei der Waschpermanenz. So wurden im Labor positive Werte insbesondere gegen Bakterien auch noch nach einigen 10 Wäschen bei 40 °C nach ISO 1 gefunden.

Die Wirkstoffe der erfindungsgemässen Formulierungen überstehen die thermische Fixierung auf den Textilien chemisch weitgehend unverändert und verdampfen nicht in massgeblichen Mengen. Diese Resultate wurden unter den geprüften Bedingungen erhalten, die so gewählt worden sind, dass sie für die industrielle Praxis relevant sind. Geprüft wurden die erfindungsgemässen Formulierungen auf allen vier Standardsubstraten. Dies ist ein wichtiger Fortschritt gegenüber den bisher bekannten Formulierungen.

Die Waschpermanenz, nachgewiesen in Agar-Diffusionstests gegen Bakterien ist bei den erfindungsgemässen Formulierungen ausgezeichnet. Durch die Applikation der erfindungsgemässen Formulierungen zusammen mit verschiedenen Polymerdispersionen kann die Waschpermanenz auch gegen Mikropilze verbessert werden. Äusserst positiv überraschend waren dabei die Resultate, die bei der Analyse auf 3-Phenoxybenzyl-(1 R,S)-cis-trans-2,2-dimethyl-3-(2,2-dichlorvinyl)-cyclopropancarboxylat nach dem Waschen gefunden wurden. So fand man zum Beispiel nach 5 Wäschen nach ISO 1 noch gut 80 % des ursprünglich durch das Foulard-Verfahren aufgebrachten Permethrins auf Baumwolle und sogar rund 90 % auf Polyester wieder. Diese Werte sind um Faktoren besser, als bei allen bisherigen Versuchen. Zudem konnten diese Werte mit Konzentrationen von Polymerdispersionen erreicht werden, die den Griff der ausgerüsteten Textilien noch nicht sehr stark veränderten.

Textile Gegenstände, die mit den erfindungsgemässen Formulierungen ausgerüstet worden sind, lassen sich ohne negative Beeinflussung der Umwelt entsorgen.

### Ausführungsbeispiele:

a) Beispiel für die Herstellung einer typischen Formulierung für den antimikrobiellen Schutz:
14 Kilogramm N-Methylpyrrolidon werden vorgelegt, 15 Kilogramm 1,2-Benzisothazolin-3-on Press-Paste mit einem Restwassergehalt von 27 % werden zugegeben, auf 50 °C erwärmt und unter Rühren langsam 56 Kilogramm Polyethylenglycol mit einer durchschnittlichen Molmasse von 400 zugeben und dann 15 Kilogramm eines ethoxylierten Fettalkohols mit 10 bis 18 EO Einheiten unter rühren zugeben. Rühren bis die Lösung homogen ist.
b) Beispiel für die Herstellung einer typischen Formulierung für den antimikrobiellen Schutz mit gleichzeitigem Schutz gegen Hausstaubmilben, z. B. Dermatophagoides pteronyssinus:
114 Kilogramm Benzylalkohol vorlegen, auf 60 °C erwärmen und unter Rühren 12 Kilogramm Bispyrithion zugeben. Die entstehende Lösung zu einer Lösung aus 20 Kilogramm 1,2-Benzisothazolin-3-on Press-Paste mit einem Restwassergehalt von 22 % in 28 Kilogramm N-Methylpyrrolidon und 20 Kilogramm eines ethoxylierten Fettalkohols mit 10 bis 18 EO Einheiten und 6 Kilogramm 3-Phenoxybenzyl-(1 R,S)-cis-trans-2,2-dimethyl-3-(2,2-dichlorvinyl)-cyclopropancarboxylat geben, rühren bis homogen.
c) Beispiel für die Herstellung einer typischen Formulierung für den antimikrobiellen Schutz:
25 Kilogramm N-Methylpyrrolidon werden vorgelegt, 5 Kilogramm 2,3,5,6,-Tetrachlor-4-(methylsulfonyl)-pyridin, 35 Kilogramm Propylenglycol und anschliessend 8 Kilogramm 1,2-Benzisothazolin-3-on Press-Paste mit einem Restwassergehalt von 22 %, dann 27 Kilogramm eines ethoxylierten Fettalkohols mit 12 bis 15 EO Einheiten werden unter Rühren zugegeben.
d) Beispiel für die Herstellung einer typischen Formulierung für den antimikrobiellen Schutz:
25 Kilogramm N,N-Dimethylacetamid werden vorgelegt, 5 Kilogramm 2,3,5,6,-Tetrachlor-4-(methylsulfonyl)-pyridin, 35 Kilogramm Propylenglycol und anschliessend 8 Kilogramm 1,2-Benzisothazolin-3-on Press-Paste mit einem Restwassergehalt von 22 %, dann 27 Kilogramm eines ethoxylierten Fettalkohols mit 12 bis 15 EO Einheiten werden unter Rühren zugegeben.
e) Beispiel für die Herstellung einer typischen Formulierung für den antimikrobiellen Schutz mit gleichzeitigem Schutz gegen Hausstaubmilben z. B. Dermatophagoides pteronyssinus:
18 Kilogramm N-Methylpyrrolidon vorlegen, auf 40 °C erwärmen und unter Rühren 12 Kilogramm Tolylfluanid zugeben. Zu dieser Mischung 40 Kilogramm Polyethylenglycol 400 und dann 10 Kilogramm 1,2-Benzisothazolin-3-on Press-Paste mit einem Restwassergehalt von 22 % zugeben, dann 20 Kilogramm eines ethoxylierten Fettalkohols mit 12 bis 15 EO Einheiten zugeben und rühren bis homogen.
f) Beispiel für die Herstellung einer typischen Formulierung für den antimikrobiellen Schutz:
60 Kilogramm Benzylalkohol vorlegen, auf 60 °C erwärmen und unter Rühren 6 Kilogramm Bispyrithion (handelsübliche Ware von Arch) mit einem Restwassergehalt von rund 30 % zugeben. Die entstehende Lösung zu einer Lösung aus 10 Kilogramm 1,2-Benzisothazolin-3-on Press-Paste mit einem Restwassergehalt von 26 % in 12 Kilogramm N-Methylpyrrolidon und 12 Kilogramm eines ethoxylierten Fettalkohols mit 10 bis 18 EO Einheiten geben, rühren bis homogen.
g) Beispiel für die Herstellung einer typischen Formulierung für den antimikrobiellen Schutz mit gleichzeitigem Schutz gegen Hausstaubmilben z. B. Dermatophagoides pteronyssinus:
120 Kilogramm Benzylalkohol vorlegen, auf 60 °C erwärmen und unter Rühren 12 Kilogramm Bispyrithion mit einem Restwassergehalt von 30 % zugeben. Die entstehende Lösung zu einer Lösung aus 20 Kilogramm 1,2-Benzisothazolin-3-on Press-Paste mit einem Restwassergehalt von 22 % in 28 Kilogramm N-Methylpyrrolidon und 20 Kilogramm eines ethoxylierten Fettalkohols mit 10 bis 18 EO Einheiten und 6 Kilogramm 3-Phenoxybenzyl-(1 R,S)-cistrans-2,2-dimethyl-3-(2,2-dichlorvinyl)-cyclopropancarboxylat geben, rühren bis homogen.
h) Applikation der Formulierung auf Gewebe aus Baumwolle mittels Foulard-Verfahren:
15 Gramm der Formulierung aus dem Beispiel a) werden mit Wasser, das 0,5 Gramm pro Liter Sandozin NRW (ein Produkt der Clariant) als Netzmittel enthält, auf 1 Liter unter Rühren aufgefüllt. Das Bad wird mit Essigsäure auf pH 5 eingestellt und mittels Foulard-Verfahren auf Baumwoll-Gabardine, mit einem Gewicht pro Quadratmeter von 198 Gramm, in einem Verhältnis Flotte zu Gewebe von 0,7 zu 1 appliziert. Das Tuch wird im Spannrahmen für zwei Minuten bei 120 °C getrocknet. Ein Teil dieses Tuches wird im Spannrahmen für 60 Sekunden auf 180 °C aufgeheizt. Diese Muster werden im Originalzustand und nach Wäschen nach ISO 1 gegen die Bakterien Staphylococcus aureus, Klebsiella pneumoniae und Escherichia coli im Agar-Diffusionstest nach der Methode nach SN 195 920 geprüft. Die Resultate sind hervorragend, so zeigen die Muster im Originalzustand deutliche Hemmzonen. Dies sowohl Muster, die nur getrocknet wurden, als auch die Muster, die thermisch unter technisch maximal üblichen Kondensationsbedingungen belastet wurden. Auch nach Wäschen nach ISO 1 mit ECE-Waschmittel wurden zum Teil Resultate erreicht, wo kein Bewuchs der Prüfmuster durch Bakterien bis nach mehr als 90 Waschzyklen aufgetreten ist. Einzig gegen Escherichia coli werden die Werte bereits unter 90 Waschzyklen schwächer. Aber auch gegen diesen Keim wurden zum Teil gute Resultate nach 70 Waschzyklen erreicht, was von keiner anderen in unseren Labors geprüften Ausrüstung auch nur annähernd erreicht worden ist.
Analog diesem Beispiel wurden Gewebe aus Wolle mit den erfindungsgemässen Formulierungen, zum Beispiel nach dem Beispiel a) im Foulard-Verfahren ausgerüstet und auf dem Spannrahmen bei 150 °C für 2 Minuten behandelt. Auf die gleiche Art ausgerüstetes Gewebe aus Polyamid ist bei 180 °C 30 Sekunden thermisch behandelt worden. Diese Behandlung von Polyamid bei so hoher Temperatur ist technisch unüblich. Gewebe aus Polyester, das ebenfalls wie oben beschrieben ausgerüstet worden ist, wurde bei 180 °C 30 Sekunden thermisch behandelt. Die Prüfungen der so behandelten Gewebe erfolgte genauso wie die oben beschriebene Prüfung der Gewebemuster aus Baumwolle. Die erreichbaren Waschzyklen sind bei allen Substraten sehr hoch, das heisst, nach einigen 10 Waschzyklen werden gegen alle oben aufgezählten Bakterien im Agar-Diffusionstest nach SN 195 920 gute Resultate erreicht.
i) Applikation der Formulierung auf Gewebe aus Baumwolle mittels Foulard-Verfahren:
15 Gramm der Formulierung aus dem Beispiel f) werden mit Wasser, das 0,5 Gramm pro Liter Sandozin NRW als Netzmittel enthält, auf 1 Liter unter Rühren aufgefüllt. Das Bad wird mit Essigsäure auf pH 5 eingestellt und mittels Foulard-Verfahren auf Baumwoll-Gabardine, mit einem Gewicht pro Quadratmeter von 198 Gramm, in einem Verhältnis Flotte zu Gewebe von 0,7 zu 1 appliziert. Das Tuch wird im Spannrahmen für zwei Minuten bei 120 °C getrocknet. Ein Teil dieses Tuches wird im Spannrahmen für 30 Sekunden auf 180 °C aufgeheizt. Diese Muster werden im Originalzustand und nach Wäschen nach ISO 1 gegen die Bakterien Staphylococcus aureus, Klebsiella pneumoniae und Escherichia coli im Agar-Diffusionstest nach der Methode nach SN 195 920 geprüft. Nach SN 195 921 wird gegen die Mikroorganismen Aspergillus niger, Candida albicans und Trichophyton mentagrophytes geprüft. Die Resultate sind hervorragend, so zeigen die ausgerüsteten Muster mit allen Substraten deutliche Hemmzonen gegen alle Prüfkeime. Dies sowohl Muster, die nur getrocknet wurden als auch die Muster, die thermisch unter technisch maximal üblichen Kondensationsbedingungen belastet worden sind.
j) Applikation der erfindungsgemässen Formulierungen auf verschiedene Gewebe zusammen mit verschiedenen Polymerdispersionen:
8,5 Gramm der Formulierung aus dem Beispiel b) und 50 Gramm pro Liter Appretan N 9211 werden mit Wasser, das 0,5 Gramm pro Liter Sandozin NRW als Netzmittel enthält, auf 1 Liter unter Rühren aufgefüllt. Das Bad wird mit Essigsäure auf pH 5 eingestellt und mittels Foulard-Verfahren auf Baumwoll-Gabardine, mit einem Gewicht pro Quadratmeter von 198 Gramm, in einem Verhältnis Flotte zu Gewebe von 0,7 zu 1 appliziert. Gleich wie beschrieben wird auf Gewebe aus Polyester, Polyamid und Wolle appliziert. Die Testgewebe werden im Spannrahmen für drei Minuten bei 150 °C getrocknet und kondensiert. Diese Muster werden im Originalzustand und nach Wäschen nach ISO 1 gegen die Bakterien Staphylococcus aureus, Klebsiella pneumoniae und Escherichia coli im Agar-Diffusionstest nach der Methode SN 195 920 geprüft. Nach SN 195 921 wird gegen die Mikroorganismen Aspergillus niger, Candida albicans und Trichophyton mentagrophytes geprüft. Der Gehalt an 3-Phenoxybenzyl-(1 R,S)-cis-trans-2,2-dimethyl-3-(2,2-dichlorvinyl)-cyclopropancarboxylat wird mittels HPLC-Analyse gemessen. Die Resultate sind hervorragend, so zeigen die ausgerüsteten Muster mit allen Substraten deutliche Hemmzonen gegen alle Prüfkeime. Die bei den Analysen gefunden Werte an 3-Phenoxybenzyl-(1 R,S)-cis-trans-2,2-dimethyl-3-(2,2-dichlorvinyl)-cyclopropancarboxylat zeigen deutlich, dass die Abnahme der Substanz bei den Wäschen durch das Harz auf den Substraten Baumwolle und Polyester dramatisch gebremst wird. So werden nach 5 Wäschen nach ISO 1 auf den genannten Substraten noch über 80 % der ursprünglich aufgetragenen Menge an 3-Phenoxybenzyl-(1 R,S)-cis-trans-2,2-dimethyl-3-(2,2-dichlorvinyl)-cyclopropancarboxylat (Permethrin) wieder gefunden. Auf den Substraten Wolle und Polyamid ist der positive Effekt ebenfalls sehr deutlich sichtbar, aber weniger signifikant. Dies bedeutet, dass mit den erfindungsgemässen Formulierungen zusammen mit den Polymerdispersionen die Wirkung gegen Hausstaubmilben auch nach Wäschen weitgehend erhalten bleibt. Dies ist gegenüber allen vorher durchgeführten Ausrüstungen ebenfalls ein erheblicher Vorteil. Entsprechend diesem Beispiel sind Ausrüstungen mit Appretan N 9616, Appretan N 9806 und weiteren durchgeführt worden. Die mittels HPLC-Analyse ermittelte Wiederfindungsrate des ursprünglich eingesetzten Permethrins in Prozent, zeigen tendenziell bis äusserst deutlich, dass die kombinierte Applikation von den erfindungsgemässen Formulierungen zusammen mit verschiedenen kommerziell erhältlichen Polymerdispersionstypen zu einer deutlichen Verbesserung des Gesamtergebnisses führt. Dieser Sachverhalt wird in der nachfolgenden Tabelle aufgezeigt.
Beispiele:

| **Substrat (Gewebe)** | **Harz-Typ** | **Anzahl Wäschen nach ISO 1** | **Wiederfindungsrate in % des Permethrins** |
|---|---|---|---|
| Baumwolle | ohne | 3 | 18 |
| Baumwolle | Appretan EM | 3 | 96 |
| Baumwolle | Appretan MB | 3 | 93 |
| Baumwolle | Appretan N 9210 | 5 | 62 |
| Baumwolle | Appretan MB | 5 | 76 |
| Baumwolle | Appretan N 9213 | 5 | 56 |
| Wolle | ohne | 3 | 37 |
| Wolle | Appretan MB | 3 | 51 |
| Wolle | Appretan N 9210 | 3 | 48 |
| Wolle | Appretan N 9211 | 5 | 73 |
| Polyester | ohne | 3 | 28 |
| Polyester | Appretan N 9213 | 3 | 85 |
| Polyester | Appretan N 9210 | 5 | 65 |
| Polyester | Appretan N 9616 | 5 | 79 |
| Polyamid | ohne | 5 | 19 |
| Polyamid | Appretan MB | 5 | 67 |
| Polyamid | Appretan N 9210 | 5 | 68 |

k) Speichellässigkeit nach DIN 53 180
1,0 % einer erfindungsgemässen Formulierung nach Beispiel b) wird mittels Foulard auf Gewebe aus den vier Standardsubstraten Baumwolle, Wolle, Polyamid und Polyester aufgebracht. Die Gewebe werden bei 120 °C getrocknet und anschliessend nach der DIN 53 180 alkalisch bei pH 8,65 und sauer bei pH 2,60 auf die Speichellässigkeit geprüft. Die nachstehende Tabelle gibt von den drei Wirkstoffen Bispyrithion, 1,2-Benzisothazolin-3-on (BIT)und 3-Phenoxybenzyl-(1 R,S)-cis-trans-2,2-dimethyl-3-(2,2-dichlorvinyl)-cyclopropancarboxylat (Permethrin) die Menge in Prozent bezogen auf den Ausgangswert an, die von den Geweben gelöst wird. Es wird von allen drei Wirkstoffen auf allen Substraten wenig bis sehr wenig herunter gelöst, die Speichellässigkeit der erfindungsgemässen Formulierungen ist somit gut bis sehr gut.

| **Substrat** | **pH** | **Bispyrithion [%]** | **BIT [%]** | **Permethrin [%]** |
|---|---|---|---|---|
| Baumwolle | 8,65 | < 0,1 | 0,5 | 2,8 |
| Baumwolle | 2,60 | 1,4 | 3,7 | 3,6 |
| Wolle | 8,65 | <0,2 | 0,3 | 0,3 |
| Wolle | 2,60 | < 0,2 | 0,2 | 0,3 |
| Polyamid | 8,65 | < 0,2 | 5,2 | 2,8 |
| Polyamid | 2,60 | < 0,2 | 0,7 | 3,8 |
| Polyester | 8,65 | < 0,2 | 0,1 | 1,1 |
| Polyester | 2,60 | < 0,2 | 0,2 | 0,8 |

I) Applikation der erfindungsgemässen Formulierungen auf verschiedene Gewebe zusammen mit verschiedenen Fluorcarbonen:
7,5 Gramm der erfindungsgemässen Formulierung nach Beispiel f) werden zusammen mit 30 bis 40 Gramm Nuva DWR und 3 Gramm Pentex UD (ein Netzmittel der Clariant) pro Liter Flotte angesetzt, mit Essigsäure auf pH 5 eingestellt und mittels Foulard-Verfahren auf Gewebe aus Baumwolle so appliziert, dass von der erfindungsgemässen antimikrobiellen Formulierung 0,5 %, bezogen auf das Textilgewicht, auf dem Gewebe sind. Das Tuch wird für 2 Minuten auf dem Spannrahmen bei 120 °C getrocknet und anschliessend für 3 Minuten bei 150 °C kondensiert. Geprüft wird das Tuch im Agar-Diffusionstest nach SN 195 920 gegen Staphylococcus aureus, Stamm ATCC 6538 und nach SN 195 921 gegen die beiden Mikropilze Aspergillus niger, Stamm EMPA 18 und Trichophyton mentagrophytes, Stamm EMPA 334. Gegen alle drei Keime wurden Hemmzonen von mehreren Millimetern gefunden, was einem hervorragenden antibakteriellen und antimykotischen Schutz des Gewebes entspricht. Vergleichbare Resultate wurden mit den Fluorcarbonen Nuva DWRX, Nuva HPS, Nuva TP, Nuva CSF, Nuva FPN und Nuva HPC erreicht. Bei allen Applikationen wurde 30 Gramm auf 40 Gramm Fluorcarbon pro Liter Flotte eingesetzt. Dies bei gleichem pick-up von 75 % und bei der gleichen Menge der erfindungsgemässen Formulierung. Der Hydrophobwert wurde mit dem Spraytest nach AATCC 22 gemessen und der Oleophobwert nach AATCC 118. Die Resultate aus dem Spraytest bewegten sich im Rahmen von 80 bis 100 und die Resultate aus dem Oleophobtest im schlechtesten Fall mit dem Nuva DWRX bei 3 und mit allen anderen Fluorcarbonen bei 5 respektive 6.
Die erfindungsgemässen Formulierungen, insbesondere aus den Beispielen a), b), e) und f) zeigen neben der hervorragenden Kompatibilität mit anderen Textilchemikalien eine hervorragende thermische Beständigkeit. Die Formulierungen wurden auf den drei Grundsubstraten, den Geweben aus Baumwolle, Polyamid, und Polyester bis auf 180 °C thermisch behandelt und auf Gewebe aus Wolle bis zu 150 °C. Die Wirkstoffe wurden dabei zum überwiegenden Teil auf allen Substraten nach diesen thermischen Behandlungen analytisch wieder in der eingesetzten Form gefunden, was bei so hohen Temperaturen bei den wenigsten üblicherweise eingesetzten Wirkstoffen, wie zum Beispiel dem Triclosan, auch nur annähernd so gut erreicht wird.

## Patentansprüche

1. Zusammensetzung enthaltend freies 1,2-Benzisothazolin-3-on als antimikrobiellen Wirkstoff für die antimikrobielle Ausrüstung von gewebten und nicht gewebten Textilien **dadurch gekennzeichnet, dass** sie als Träger mindestens ein polares aprotisches oder ein protisches Lösungsmittel, das zumindest in Gegenwart des mit eingesetzten Tensides bei 20 °C zumindest 0,5 % G/V löslich in Wasser ist, in Kombination mit mindestens einem Tensid enthält.

2. Zusammensetzung nach Anspruch 1, **dadurch gekennzeichnet, dass** das polare aprotische oder protische Lösungsmittel N-Methylpyrrolidon, alkylierte Ameisensäure- oder Essigsäureamide, beispielsweise N,N-Dimethylformamid oder N,N-Dimethylacetamid, oder ein aromatisches Lösungsmittel, beispielsweise Benzylalkohol oder Mischungen davon enthält.

3. Zusammensetzung nach Anspruch 1 oder 2, **dadurch gekennzeichnet, dass** das Tensid nichtionische Tenside umfasst, wie ethoxylierte Verbindungen von aromatischen Hydroxyverbindungen, beispielsweise des Nonylphenols oder ethoxylierte natürliche oder synthetische Fettsäuren oder ethoxylierte natürliche oder synthetische Fettalkohole, vorzugsweise einer Kohlenstoffkettenlänge im Bereich zwischen 8 und 20 Einheiten, und vorzugsweise ethoxyliert mit 3 bis 30 Einheiten Ethylenoxid.

4. Zusammensetzung nach einem der Ansprüche 1 bis 3, **dadurch gekennzeichnet, dass** das freie 1,2-Benzisothazolin-3-on als wässrige Dispersion oder als Press-Paste mit einem Wirkstoffgehalt im Bereich zwischen 25 und 90 %, enthalten ist.

5. Zusammensetzung nach einem der Ansprüche 1 bis 4 **dadurch gekennzeichnet, dass** als polares aprotisches oder protisches Lösungsmittel ein Alkohol, vorzugsweise ein Glycol, oder ein Gemisch aus verschiedenen Alkoholen enthalten ist.

6. Zusammensetzung nach einem der Ansprüche 1 bis 4 **dadurch gekennzeichnet, dass** der Alkohol Polyethylenglycol ist vorzugsweise im Konzentrationsbereich von 10 bis 80 Gew%.

7. Zusammensetzung nach einem der Ansprüche 1 bis 4 **dadurch gekennzeichnet, dass** als polares aprotisches oder protisches Lösungsmittel ein organisches Lösungsmittel enthalten ist, das 1 bis 20 Gew% N-Methylpyrrolidon, 0 bis 70 Gew% eines aromatischen Lösungsmittels, vorzugsweise Benzylalkohol enthält.

8. Zusammensetzung nach einem der Ansprüche 1 bis 7 **dadurch gekennzeichnet, dass** sie zusätzlich den Wirkstoff Bispyrithion enthält, vorzugsweise in einem Anteil von bis zu 10 Gew%.

9. Zusammensetzung nach einem der Ansprüche 1 bis 7 **dadurch gekennzeichnet, dass** sie zusätzlich den Wirkstoff 3-Phenoxybenzyl-(1 R,S)-cistrans-2,2-dimethyl-3-(2,2-dichlorvinyl)-cyclopropancarboxylat enthält, vorzugsweise in einem Anteil von bis zu 10 Gew%.

10. Zusammensetzung nach einem der Ansprüche 1 bis 7 **dadurch gekennzeichnet, dass** sie als Wirkstoffkombination 1 und 20 Gew % 1,2-Benzisothazolin-3-on, 0 bis 10 Gew% Bispyrithion, 0 bis 10 Gew% 3-Phenoxybenzyl-(1 R,S)-cis-trans-2,2-dimethyl-3-(2,2-dichlorvinyl)-cyclopropancarboxylat enthält.

11. Zusammensetzung nach einem der Ansprüche 1 bis 7 **dadurch gekennzeichnet, dass** sie 1 bis 20 Gew% freiem 1,2-Benzisothazolin-3-on, einen oder mehrere andere antimikrobielle und/oder akarizide Wirkstoffe, vorzugsweise 2,4,4'-Trichlor-2'-hydroxydiphenylether, dem Akarizid Permethrin mit dem IUPAC-Namen 3-Phenoxybenzyl-(1 R,S)-cis-trans-2,2-dimethyl-3-(2,2-dichlorvinyl)-cyclopropancarboxylat in allen Isomerenverhältnissen, Tolylfluanid, 2,3,5,6,-Tetrachlor-4-(methylsulfonyl)-pyridin, 5-Amino-1,3-bis-(2-ethylhexyl)-5-methyl-hexahydropyrimidin, quarternären Ammoniumverbindungen wobei mindestens eine Alkylkette 8 bis 18 Kohlenstoffatome zählt, wie vorzugsweise Di-n-decyl-dimethyl-ammoniumchlorid, 2-n-Butyl-1,2-Benzisothazolin-3-on, Bispyrithion, 2-n-Octyl-4-isothiazol-3-on, 4,5-Dichlor-2-n-octyl-4-isothiazolin-3-on, Diiodmethylsulfonyltoluol, 3-lod-2-propinylbutylcarbamat, N-(Dichlorfluormethylthio)-phthalimid, o-Phenylphenol, oder 3,4,4'-Trichlorcarbanilid enthält.

12. Verwendung einer Zusammensetzung nach einem der Ansprüche 1 bis 11 zur antimikrobiellen Ausrüstung von gewebten und nicht gewebten Textilien, **dadurch gekennzeichnet, dass** die Zusammensetzung in Wasser in einer Konzentration von 5 bis 100 Gramm pro Liter Flotte eingesetzt wird, dies entweder allein oder zusammen mit weiteren Textilchemikalien und dass diese Flotte durch Foulardieren, Sprühen, Ausziehen, Schäumen zusammen mit Schaumhilfsmitteln oder Aufrakeln auf gewebte oder nicht gewebte Textilien, Fasern oder Garne oder Tuftings oder Maschenware aufgebracht wird.

13. Verwendung nach Anspruch 12, **dadurch gekennzeichnet, dass** als weitere Textilchemikalien Vinylacetat-Homo-Copolymere, Vinylacetat-Ethylen- oder Acrylat-Copolymeren, Styrol-Acrylat-Copolymeren oder Hydrophobiermitteln resp. Oleophobiermitteln wie dispergierte Fluorcarbone, gleichzeitig oder nacheinander auf gewebte oder nicht gewebte Textilien, Fasern, Garne, Maschenware oder Tuftings aufgebracht werden.

14. Verwendung nach Anspruch 12 oder 13, **dadurch gekennzeichnet, dass** die Zusammensetzung zusammen mit anderen Textilchemikalien im Foulard- oder im Auszugsverfahren, im Schaumauftrag oder durch Sprühen auf die gewebten oder nicht gewebten Textilien, die vorzugsweise Fasern aus Cellulosefasern, wie Baumwolle, Polyamid, Polyester oder Wolle enthalten, aufgebracht wird.
